# FASCICULE DE BREVET EUROPEEN

(11) **EP 1 957 431 B1**
(45) Date de publication et mention de la délivrance du brevet: **08.04.2009**
(21) Numéro de dépôt: 06842049.6
(22) Date de dépôt: 28.11.2006
(51) Int. Cl.: C04B 41/85, C04B 41/89, F16D 69/02

(54) **PROTECTION CONTRE L'OXYDATION DE MATERIAUX COMPOSITES CONTENANT DU CARBONE**
OXIDIERUNGSSCHUTZ FÜR VERBUNDWERKSTOFFE MIT KOHLENSTOFF
PROTECTION AGAINST THE OXIDATION OF COMPOSITE MATERIALS CONTAINING CARBON

(30) Priorité: 29.11.2005 FR 0512060
(43) Date de publication de la demande: 20.08.2008
(73) Titulaire: Snecma Propulsion Solide, 33187 Le Haillan Cedex (FR)
(72) Inventeur: DISS, Pascal, F-33185 Le Haillan (FR); LAVASSERIE, Eric, F-33130 Begles (FR)
(74) Mandataire: Joly, Jean-Jacques
(86) Numéro de dépôt international: PCT/FR2006/051238
(87) Numéro de publication internationale: WO 2007/063243

(56) Documents cités:
- WO-A-20/05012744
- US-A1- 2004 020 728

## Description

### Arrière-plan de l'invention

L'invention concerne la protection contre l'oxydation de pièces en matériau composite contenant du carbone, en particulier de pièces en matériau composite thermostructural comprenant un renfort en fibres de carbone densifié par une matrice au moins partiellement en carbone.

Les matériaux composites thermostructuraux sont caractérisés par leurs bonnes propriétés mécaniques et leur capacité à les conserver à des températures élevées. Toutefois, en milieu oxydant, cette capacité de conserver des bonnes propriétés mécaniques à température élevée est conditionnée par la présence d'une protection efficace contre l'oxydation. En effet, quel que soit le mode d'élaboration de tels matériaux, ils présentent inévitablement une porosité interne résiduelle ouverte offrant à l'oxygène du milieu ambiant un accès à coeur du matériau.

En outre, dans certaines applications, notamment des disques de frein en matériau composite carbone/carbone (C/C) utilisés en aéronautique, la protection contre l'oxydation doit conserver son efficacité en présence de catalyseurs d'oxydation (présents dans des produits déverglaçants utilisés sur les pistes d'atterrissage) et aussi en présence d'humidité (atterrissage et roulage sur des pistes humides).

A cet effet, il est bien connu d'utiliser des protections à base de phosphate d'aluminium, ou plus généralement à base de phosphates métalliques seuls ou en combinaison tels que des phosphates d'aluminium et de zinc. Le dépôt sur les pièces à protéger peut être contrôlé en quantité et en répartition géométrique, par exemple pour ne pas appliquer de composition de protection sur certaines parties des pièces telles que les surfaces frottantes de disques de frein où la présence de la composition de protection pourrait affecter les propriétés tribologiques. On utilise avantageusement un produit surfactant qui favorise la pénétration en profondeur de la composition de protection et qui est appliqué au préalable ou mélangé directement à la composition de protection, et on réalise une application de la composition de la même manière qu'une peinture. On pourra se référer par exemple aux documents US 5 853 821, EP 0 747 334, EP 0 677 499, EP 0 606 851 et US 2004/0020728. Dans ce dernier document, de l'oxyde de bore hydraté peut être présent en faible quantité au côté d'acide phosphorique et de phosphates, de même que de l'oxyde de titane TiO₂ qui est présent pour seulement donner une coloration blanche au revêtement afin qu'il soit visible. En effet, les propriétés de TiO₂ font que ce dernier ne peut pas contribuer à améliorer le potentiel protecteur du système, que ce soit par ramollissement en générant un film protecteur - le point de fusion de TiO₂ étant de l'ordre de 1 850°C alors que les températures d'utilisation envisagées ne dépassent pas 1 600°F soit environ 870°C - ou par combinaison chimique avec les autres espèces présentes en raison de sa stabilité.

Dans tous les cas, l'efficacité de telles compositions est limitée au-delà d'un certain seuil de température, environ 1000°C, à partir duquel intervient la décomposition de leurs composés phosphates actifs.

Pour améliorer la tenue au-delà de ce seuil, il est possible de combiner des protections contre l'oxydation à base de phosphate(s) métallique(s) avec des barrières de diffusion qui s'opposent à l'accès de l'oxygène vers le matériau composite aux températures élevées, telles que des phases vitreuses cicatrisantes ou des couches externes étanches, par exemple des couches externes en carbure de silicium (SiC) obtenues par dépôt chimique en phase vapeur ou par application d'une composition liquide contenant du carbure de silicium en suspension ou un précurseur de carbure de silicium (tel qu'une résine de type PCS - polycarbosilane - diluée dans une solvant organique et transformée en carbure de silicium par traitement thermique). On pourra notamment se référer au document US 6 740 408 qui décrit la formation d'une phase vitreuse cicatrisante par application d'une composition contenant un mélange de poudre de diborure de titane TiB₂, de poudre d'oxydes réfractaires vitreux constitués majoritairement d'un mélange borosilicaté, d'une résine précurseur de SiC et d'un solvant organique de la résine.

Toutefois, la réalisation de la protection complète contre l'oxydation est alors plus complexe, car la protection est constituée de deux couches superposées nécessitant chacune un processus de mise en oeuvre spécifique. En outre, l'utilisation de solvant organique pose des problèmes en termes de sécurité et d'environnement.

Pour remédier à ces inconvénients, il est proposé dans le document WO 05/012744 d'utiliser une composition d'imprégnation contenant au moins un phosphate métallique en solution, de la poudre de diborure de titane (TiB₂) et d'autres charges solides éventuelles.

TiB₂ se comporte comme un réservoir pour la formation très progressive de B₂O₃ capable de conférer à la protection contre l'oxydation un caractère de barrière de diffusion vis-à-vis de l'oxygène du milieu ambiant. Par la génération très progressive de B₂O₃, il devient possible de compenser son élimination par volatilisation au-delà de 1000°C, et d'assurer l'existence d'une efficacité protectrice jusqu'à 1400°C ou plus. En outre, par l'association avec l'oxygène et l'élément phosphore P présent dans la composition, et en présence d'un élément M catalyseur d'oxydation du carbone provenant de l'extérieur, TiB₂ est capable de former des oxydes complexes de type P-O-Ti-M. La formation de tels complexes permet ainsi de piéger du catalyseur d'oxydation venant de l'extérieur sous la forme d'un verre, c'est-à-dire au-delà de 1000°C. Le verre ainsi formé contribue en outre à l'effet barrière de diffusion à l'oxygène jusqu'à au moins 1400°C tout en étant insoluble dans l'eau, c'est-à-dire tout en permettant d'obtenir une protection stable en milieu humide.

Il s'avère toutefois que l'incorporation de TiB₂ dans une solution aqueuse de phosphate(s) métallique(s) s'accompagne d'un fort dégagement gazeux irritant et odorant et résulte en une suspension ayant une faible durée de vie utile, donc qui ne peut être préparée à l'avance et stockée, la viscosité augmentant rapidement.

### Objet et résumé de l'invention

L'invention a pour but de fournir un procédé permettant de protéger contre l'oxydation des pièces en matériau composite contenant du carbone de façon efficace, y compris en présence de catalyseurs d'oxydation du carbone, en présence d'humidité et en cas d'exposition à des hautes températures supérieures à 1000°C, tout en pouvant être mis en oeuvre de façon aisée sans les inconvénients précités.

Ce but est atteint grâce à un procédé selon lequel, conformément à l'invention, on utilise une composition d'imprégnation contenant au moins un composé du phosphore, du titane élémentaire, et du bore ou un composé du bore autre que du diborure de titane, pour former, en présence d'oxygène et d'au moins un élément M alcalin ou alcalino-terreux catalyseur de l'oxydation du carbone, au moins une association de type P-O-Ti-M liée par de l'oxyde de bore B₂O₃ et piégeant l'élément M.

L'utilisation de titane élémentaire est particulièrement avantageuse en raison de sa réactivité favorisant la formation de l'association recherchée de type P-O-Ti-M.

Selon une particularité du procédé, au moins un élément M est introduit dans la composition d'imprégnation, par exemple sous forme d'un sel d'alcalin ou d'alcalino-terreux. On obtient ainsi d'emblée au moins une association de type P-O-Ti-M conférant une capacité de protection au-delà de 1000°C au stade initial d'utilisation de la pièce protégée.

Le titane élémentaire est avantageusement introduit dans la composition d'imprégnation simplement sous forme de poudre de titane. De façon similaire, le bore peut être introduit dans la composition d'imprégnation simplement sous forme de poudre de bore élémentaire.

Selon encore une autre particularité du procédé, après imprégnation, un traitement thermique est effectué à une température comprise entre 350°C et 750°C environ.

La composition d'imprégnation peut contenir en outre des charges solides réfractaires telles que des charges de silice, alumine, argile (notamment kaolin), talc, avantageusement sous forme de poudre.

La composition d'imprégnation peut contenir, en pourcentages en poids :
- de 3% à 45% de phosphate(s) métallique(s) et/ou acide phosphorique,
- de 1% à 20% de poudre de titane,
- de 5% à 50% de poudre de bore,
- de 1% à 20% d'un sel d'alcalin ou alcalino-terreux,
- de 0% à 40% d'autres charges solides réfractaires, et
- de 10% à 90% d'eau.

Selon encore une autre particularité du procédé, il comprend une phase préliminaire de traitement de la pièce par une solution contenant un agent surfactif et séchage, de manière à conférer au matériau composite une mouillabilité accrue par la présence de l'agent surfactif.

### Brève description des dessins

D'autres particularités et avantages de l'invention ressortiront à la lecture de la description faite ci-après, à titre indicatif mais non limitatif, en référence aux dessins annexées, sur lesquels :
- la figure 1 est un ordinogramme montrant un mode de mise en oeuvre d'un procédé selon l'invention ; et
- les figures 2 à 11 montrent des courbes représentant la perte de masse d'échantillons en matériau composite C/C munis d'une protection contre l'oxydation conformément à l'invention ou selon l'art antérieur et soumis à des tests d'oxydation dans diverses conditions.

### Description détaillée de modes de réalisation de l'invention

L'invention s'applique à des pièces en matériau composite contenant du carbone, c'est-à-dire à des pièces formées d'un renfort fibreux densifié par une matrice, dans lesquelles les fibres de renfort et/ou la matrice sont au moins partiellement en carbone. Il s'agit typiquement de pièces en matériau composite C/C ou de pièces en matériau composite à renfort en fibres de carbone et à matrice céramique ou matrice mixte carbone-céramique. Des exemples de telles pièces sont des disques de frein, notamment des disques de freins d'avions.

L'élaboration de pièces en matériau composite de ce type comprend la formation d'une structure fibreuse de renfort et la densification de celle-ci par une matrice. La densification peut être réalisée par voie liquide, c'est-à-dire par imprégnation des fibres du renfort par une composition liquide contenant un précurseur de la matrice, par exemple une composition contenant une résine, et par transformation du précurseur par traitement thermique. La densification peut aussi être faite par voie gazeuse, c'est-à-dire par infiltration chimique en phase vapeur.

Quel que soit le mode d'élaboration, le matériau composite obtenu présente une porosité résiduelle ouverte interne, c'est-à-dire un ensemble de pores inter-communicants dans l'épaisseur du matériau.

La mise en place d'une protection contre l'oxydation par imprégnation au moyen d'une composition liquide consiste alors à former un revêtement des pores accessibles du matériau composite, sur une certaine profondeur à partir d'une surface de la pièce sur laquelle cette composition est appliquée.

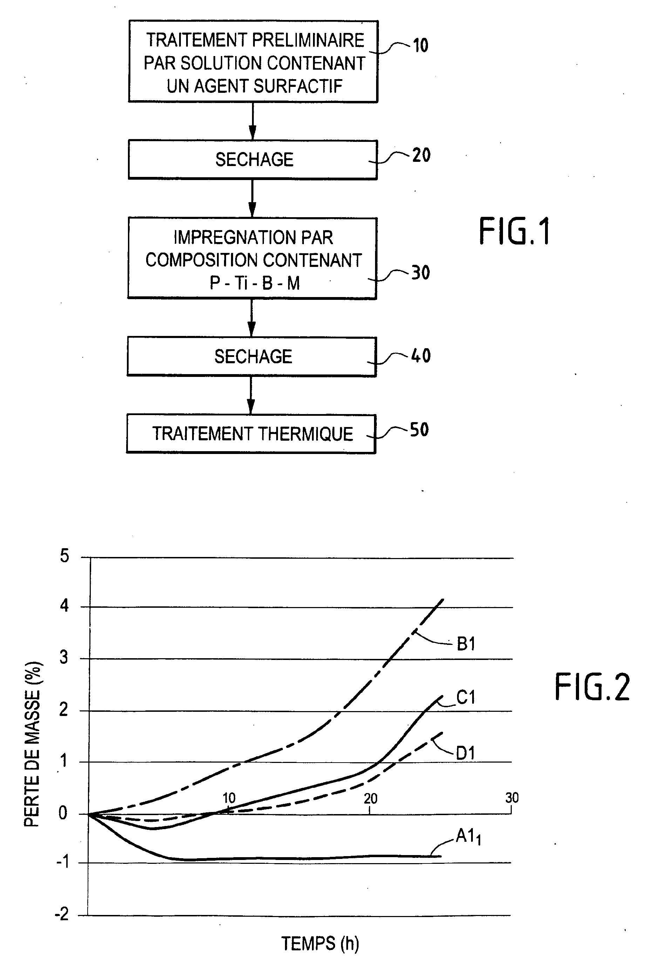

Dans le mode de réalisation de la figure 1, une première phase du procédé consiste à réaliser un traitement en profondeur de la pièce au moyen d'une solution aqueuse pénétrant au sein de la porosité ouverte du matériau (étape 10) et contenant un agent surfactif, ou agent mouillant. Après séchage (étape 20), l'agent surfactif présent sur la surface de pores du matériau confère à celui-ci une mouillabilité accrue.

Une telle phase préliminaire de traitement en profondeur de la pièce est décrite dans le document US 5 853 821 déjà cité.

On utilise avantageusement un agent surfactif, soluble dans l'eau et non ionique, tel qu'un acide gras oxyéthyléné, un alcool gras oxyéthyléné, un alkyl-phénol oxyéthyléné ou un ester de poly-ol supérieur. L'agent surfactif est ajouté à l'eau dans une proportion représentant de préférence entre 0,05 % et 5 % du poids de l'eau afin de conserver à la solution aqueuse une fluidité lui permettant de pénétrer facilement au coeur du matériau.

Le traitement préliminaire de la pièce peut être réalisé pour également nettoyer le matériau composite. A cet effet, la pièce est par exemple immergée dans un bac à ultrasons contenant l'agent surfactif en solution aqueuse.

Après traitement préliminaire, on réalise une étape 30 d'imprégnation de la pièce en matériau composite par une composition en milieu aqueux contenant au moins un composé du phosphore en solution dans de l'eau, du titane élémentaire Ti, du bore ou un composé du bore autre que TiB₂ et un élément M alcalin ou alcalino-terreux catalyseur de l'oxydation du carbone ou un composé d'un élément M.

Le composé du phosphore peut être de l'acide phosphorique ou, de préférence, un ou plusieurs phosphates métalliques choisis parmi des phosphates d'aluminium, de zinc, de manganèse,... On utilisera avantageusement du dihydrogénophosphate d'aluminium Al(H₂PO₄)₃.

Le titane élémentaire est introduit avantageusement sous forme de poudre du métal titane.

Le bore est introduit de préférence sous forme de poudre de l'élément bore. On pourrait utiliser aussi une poudre d'un composé du bore autre que TiB₂, par exemple B₂O₃, ou tout composé permettant de former une association de type P-O-Ti-M sans perturber la stabilité de la composition d'imprégnation.

L'élément M est choisi par exemple parmi le sodium, le potassium, le calcium, le magnésium. Il est introduit de préférence sous forme d'un sel tel qu'un phosphate, un chlorure, un acétate, dissous dans la composition aqueuse, étant noté que tout sel capable de permettre la formation de l'association P-O-Ti-M sans perturber la stabilité de la composition peut convenir.

Des charges réfractaires solides supplémentaires peuvent être introduites dans la composition d'imprégnation. Ces charges contribuent notamment au comblement de la porosité du matériau composite. Elles peuvent être choisies parmi des poudres de silice, d'alumine, d'argile (notamment kaolin) et de talc.

Afin de conserver une capacité d'imprégnation en profondeur dans le matériau composite, la granulométrie moyenne des poudres introduites dans la composition d'imprégnation est de préférence comprise entre 0,1 µm et 200 µm.

Typiquement, la composition d'imprégnation contient, en pourcentages en poids :
- de 3% à 45% et de préférence de 20% à 40% de phosphate(s) métallique(s) et/ou acide phosphorique,
- de 1% à 20% et de préférence de 5% à 20% de poudre de titane,
- de 5% à 50% et de préférence de 5% à 20% de poudre de bore,
- de 1% à 20% et de préférence de 5% à 20% d'un sel d'alcalin ou alcalino-terreux,
- de 0% à 40% et de préférence de 0% à 10% d'autres charges solides réfractaires, et
- de 10% à 90% et de préférence de 20% à 40% d'eau.

La préparation de la composition d'imprégnation ne donne lieu à aucun dégagement gazeux irritant ou nauséabond tel que celui rencontré en mettant en oeuvre le procédé de l'état de la technique évoqué plus haut. En outre, la composition est suffisamment stable pour pouvoir être conservée plusieurs dizaines d'heures sans augmentation de la viscosité susceptible d'affecter sa mise en oeuvre.

A l'étape 30, la composition d'imprégnation est appliquée à la surface de la pièce en matériau composite. L'application peut être réalisée sous pression atmosphérique, par exemple par peinture au moyen d'un pinceau ou d'une brosse ou par pulvérisation. Il n'est pas nécessaire de faire appel à une surpression ou au vide pour forcer la composition d'imprégnation à pénétrer profondément sous l'effet d'une différence de pression. En outre, l'application de la composition d'imprégnation peut facilement être réalisée de façon sélective sur certaines parties seulement de la pièce. Dans le cas de disques de frein, cela permet de ne pas appliquer de protection contre l'oxydation sur les faces frottantes, ce qui, sinon, pourrait affecter le comportement tribologique.

L'étape 30 peut être répétée plusieurs fois consécutivement.

Après l'étape 30, on procède à un séchage, par exemple en étuve à l'air, jusqu'à environ 350°C (étape 40), laissant une couche de protection sur les surfaces mouillées par la composition d'imprégnation.

Après séchage, la pièce peut être traitée thermiquement dans un four sous atmosphère neutre, par exemple sous atmosphère d'azote (étape 50), ce qui permet de compléter la formation du composé actif pour la protection contre l'oxydation catalytique du carbone. Le traitement thermique peut être réalisé en élevant la température jusqu'à environ 700°C à 900°C.

On notera que la phase préliminaire (étapes 10, 20) est optionnelle, mais favorise une imprégnation à coeur dans le matériau.

Les exemples donnés plus loin montrent une amélioration nette du comportement en milieu oxydant des pièces protégées conformément à l'invention, en comparaison avec l'état de la technique, et ce dans le cas d'exposition à très haute température (1000°C ou plus), en présence d'humidité et en présence de catalyseurs d'oxydation du carbone. Ces performances remarquables s'ajoutent aux avantages de mise en oeuvre de la composition d'imprégnation (pas de dégagement gazeux et stabilité).

En effet, la présence des éléments P et Ti permet, avec l'oxygène du milieu ambiant et en présence d'un élément M catalyseur de l'oxydation du carbone de former des associations, ou oxydes complexes, de type P-O-Ti-M capables de relayer au-delà de 1000°C l'action protectrice des seuls composés du phosphore, en particulier les phosphates métalliques, tout en piégeant l'élément M. Grâce à ces « espèces-relais », une protection efficace peut être obtenue dans une plage étendue de températures, comprise par exemple entre 650°C et 1400°C. La formation de l'association de type P-O-Ti-M est favorisée par la réactivité du titane élémentaire présent.

Dans la description détaillée qui précède, au moins un élément M est introduit d'emblée dans la composition d'imprégnation. Toutefois, il est envisageable d'omettre un tel élément M de la composition d'imprégnation, la formation d'association(s) de type P-O-Ti-M intervenant en présence d'un ou plusieurs éléments M apportés par des agents extérieurs.

On notera toutefois que la présence d'au moins un élément M dans la composition d'imprégnation permet la formation d'association(s) de type P-O-Ti-M dans la protection initialement mise en place. Cela a pour avantage de pouvoir mieux cibler l'efficacité de la protection si celle-ci doit être renforcée pour des températures particulières.

L'élément bore présent dans la composition d'imprégnation assure une bonne mouillabilité des surfaces de la porosité du matériau composite, notamment des surfaces de carbone, et permet ainsi une bonne adhérence de la couche de protection formée. Avec l'oxygène du milieu ambiant, l'élément bore forme de l'oxyde B₂O₃ qui agit comme liant pour les associations de type P-O-Ti-M et contribue à l'effet de barrière de diffusion à l'oxygène. Malgré cette présence de B₂O₃ qui est attaqué par l'eau, une très bonne tenue des pièces protégées en présence d'eau est toutefois constatée, qui provient vraisemblablement du caractère peu soluble des associations P-O-Ti-M.

### Exemple 1

Des échantillons en matériau composite C/C ont été réalisés de la façon suivante.

Des nappes fibreuses unidirectionnelles en fibres de précurseur de carbone (polyacrylonitrile préoxydé) sont superposées dans des directions différentes et liées entre elles par aiguilletage au fur et à mesure de leur superposition. La préforme fibreuse ainsi obtenue est soumise à un traitement thermique, pour transformer le précurseur en carbone par pyrolyse, puis densifiée par une matrice de carbone pyrolytique par infiltration chimique en phase vapeur. Un tel procédé est bien connu en soi. On pourra notamment se référer au document US 4 790 052. Des échantillons sont découpés dans le bloc de matériau C/C ainsi obtenu.

Plusieurs échantillons sont munis d'une protection contre l'oxydation par un processus comprenant les étapes suivantes :
(a) traitement préliminaire des échantillons par immersion dans un bac à ultrasons contenant une solution aqueuse d'agent surfactif à base d'isononylphénol polyéthoxylé disponible auprès de la société allemande Hüls sous la dénomination "Marlophen NP9", l'agent surfactif étant présent dans la solution à raison de 5% en poids. Après imprégnation, les échantillons sont séchés en étuve à environ 90°C, laissant les pores du matériau composite tapissés d'agent surfactif ;
(b) application au pinceau sur les faces des échantillons d'une solution aqueuse contenant 32,05% en poids d'Al(H₂PO₄)₃, 15,4% en poids de poudre de titane élémentaire, 15,4% en poids de poudre de bore élémentaire, 5,1% en poids de dihydrogénophosphate de potassium KH₂PO₄ et 32,05% en poids d'eau ; et
(c) séchage en étuve à l'air avec montée lente en température jusqu'à 350°C environ.

Des échantillons A1 (A1₁, A1₂, A1₃ et A1₄) ainsi protégés conformément à l'invention ont été soumis aux tests d'oxydation respectifs suivants :
(I) Exposition à l'air à 650°C pendant 6 fois 5 heures (avec mesure de la masse à la fin de chaque période de 5 heures).
(II) Exposition à l'air à 650°C pendant 5 heures à 650°C, immersion pendant 24 heures dans de l'eau à température ambiante, égouttage et exposition à l'air à 650°C pendant 4 fois 5 heures (avec mesure de la masse à la fin de chaque période de 5 heures d'exposition à l'air).
(III) Exposition à l'air à 650°C pendant 5 heures, exposition à l'air à 1200°C pendant 20 minutes, « pollution » par de l'acétate de potassium (par imprégnation sous vide par une solution d'acétate de potassium à 5% en proportion en masse) et exposition à l'air à 650°C pendant 2 fois 5 heures (avec mesure de la masse à la fin de la première période de 5 heures, de la période de 20 minutes et des deux dernières périodes de 5 heures).
(IV) Exposition à l'air à 650°C pendant 5 heures, exposition à l'air à 1400°C pendant 10 minutes et exposition à l'air à 650°C pendant 2 fois 5 heures (avec mesure de la masse à la fin de la première période de 5 heures, de la période de 10 minutes et des deux dernières périodes de 5 heures).

A titre de comparaison, chaque test a aussi été réalisé sur des échantillons du même matériau composite C/C mais protégés par des procédés de l'art antérieur, à savoir :
- des échantillons B1 obtenus en réalisant une étape (a1) semblable à l'étape (a) ci-dessus suivie d'une étape (b1) d'application au pinceau d'une solution aqueuse contenant 50% en masse d'Al(H₂PO₄)₃, le reste étant de l'eau ; d'une étape de séchage (c1) semblable à l'étape (c) ; et d'une étape (d1) de traitement thermique par élévation de la température jusqu'à 700°C sous azote, conformément à l'Exemple 1 du document US 5 853 821.
- des échantillons C1 en munissant des échantillons B1 d'un revêtement de protection par :
   - application d'une couche d'une composition contenant, en poids, 49% de TiB₂, 12,8% de poudre de verre « Pyrex », 19,1% de résine silicone commercialisée par la société allemande Wacker Chemie sous la référence « H62C » et 19,1% de solvant de la résine (xylène) ;
   - réticulation de la résine par traitement thermique à 220°C sans catalyseur ; et
   - traitement thermique de céramisation de la silicone à 900°C sous atmosphère neutre (conformément aux échantillons O les plus performants de l'Exemple 5 du document US 6 740 408).
- des échantillons D1 en réalisant des étapes (a2) et (b2) semblables aux étapes (a) et (b1) ci-dessus et suivies :
   - d'une étape (b'2) d'application au pinceau d'une solution aqueuse contenant 35% en poids de Al(H₂PO₄)₃, et 44% en poids de poudre de TiB₂, le reste étant de l'eau ;
   - d'une étape de séchage (c2) semblable à l'étape (c) et
   - d'une étape (d2) de traitement thermique semblable à l'étape (d1), conformément à l'exemple 1 du document WO 05/012744.

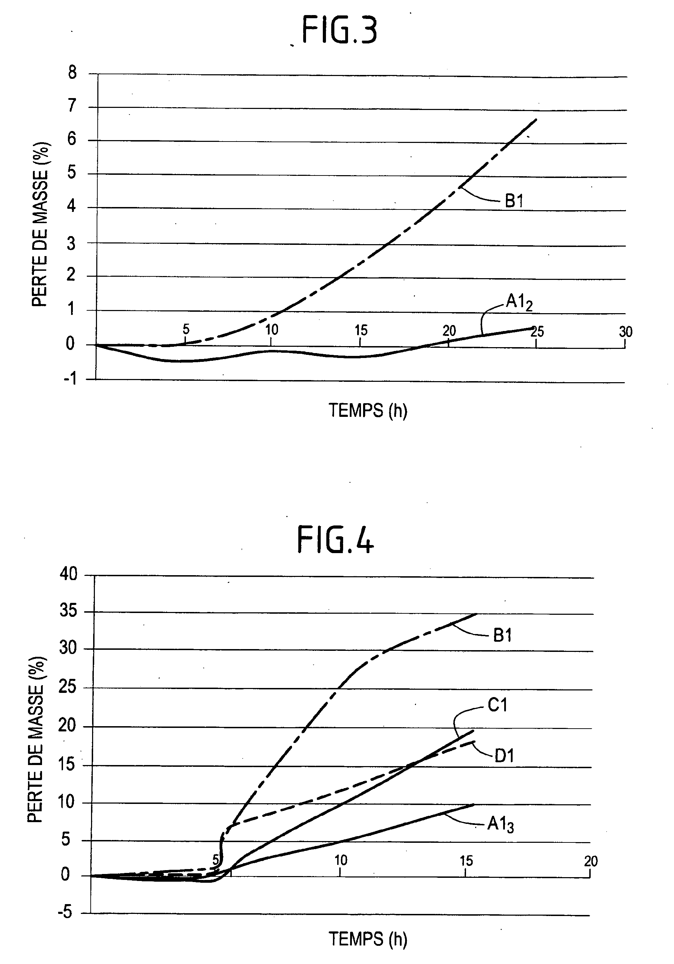

Les courbes des figures 2 à 5 illustrent les résultats obtenus pour les tests (I) à (IV), respectivement, pour les échantillons A1 et au moins certains des échantillons B1, C1 et D1, en terme de perte de masse relative (pourcentage de perte de masse mesurée par rapport à la masse de l'échantillon avant le test).

Dans tous les cas, les performances en tenue à l'oxydation obtenues par le procédé conforme à l'invention sont remarquables, que ce soit aux très hautes températures (1200°C et 1400°C), en présence d'humidité, ou en présence d'agent catalyseur de l'oxydation du carbone. Ce n'est seulement que pour le test IV (avec exposition à 1400°C) qu'une performance légèrement inférieure est observée en comparaison avec le procédé de l'art antérieur consistant à réaliser séparément une protection interne et une protection externe.

### Exemples 2 à 5

On obtient des échantillons A2 à A5 en procédant comme pour les échantillons A1 de l'exemple 1, mais en ajoutant après l'étape de séchage (c) une étape de traitement thermique par élévation de la température jusqu'à 700°C de façon semblable à l'étape (d1) et, pour les échantillons A3 à A5, en remplaçant, dans la composition d'imprégnation, les 5,1% en poids de KH₂PO₄ par le même pourcentage en poids respectivement de dihydrogénophosphate de sodium NaH₂PO₄, de chlorure de sodium NaCl et de chlorure de magnésium MgCl₂.

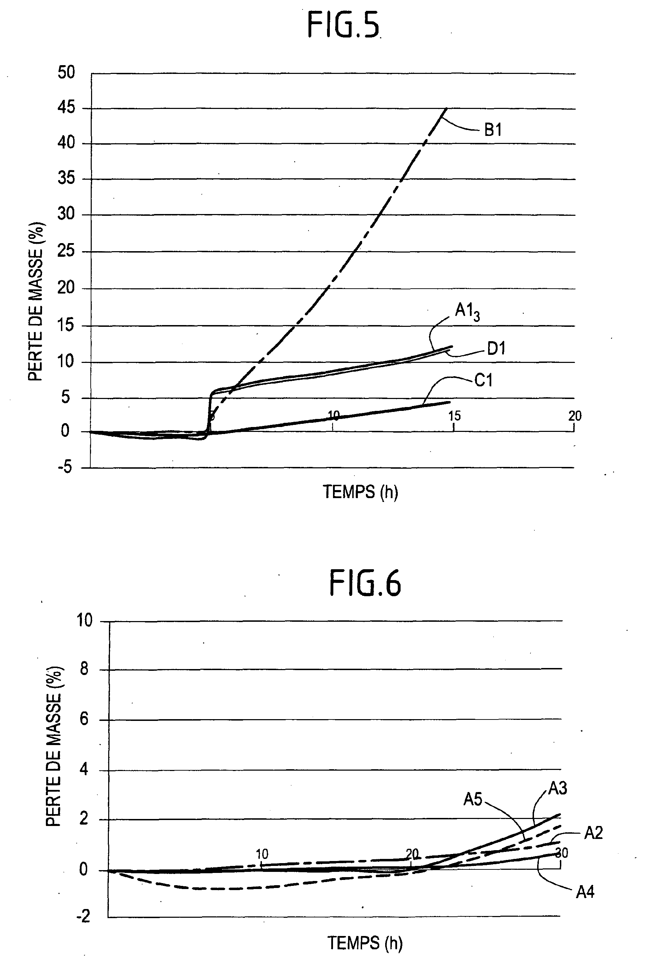

Les courbes de la figure 6 illustrent les résultats obtenus (perte de masse relative) pour les échantillons A2 à A5 soumis au test (I).

On constate que les performances des échantillons A2 à A5 sont semblables et, en comparant celles des échantillons A1 (figure 2) et A2, que le traitement thermique jusqu'à 700°C n'apporte pas d'amélioration.

### Exemple 6

On obtient un échantillon A6 en procédant comme pour l'échantillon A1 mais en augmentant la proportion en poids de poudre de titane dans la composition d'imprégnation qui contient alors 29% en poids d'Al(H₂PO₄)₃, 23,3% en poids de poudre de titane, 14% en poids de poudre de bore, 4,7% en poids de KH₂PO₄ et 29% en poids d'eau.

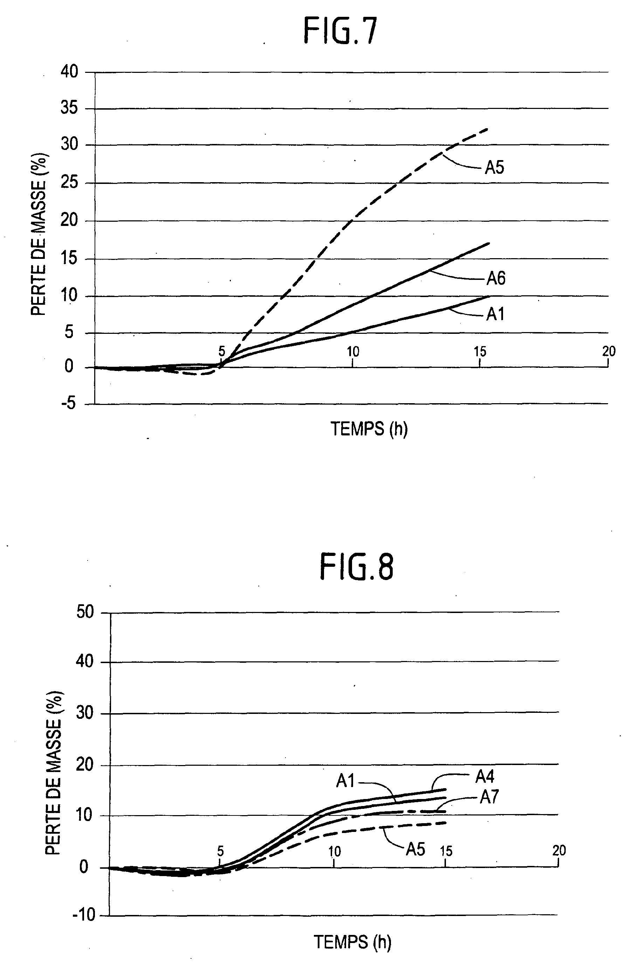

La figure 7 illustre les résultats obtenus (pertes de masse relative) pour les échantillons A1 à A6 soumis au test (III). On a fait aussi figurer sur la figure 7 les résultats obtenus pour un échantillon A5.

La comparaison des résultats obtenus avec les échantillons A1 et A6 montre une dégradation des performances par suite de l'augmentation de proportion relative de titane.

La comparaison des résultats obtenus avec les échantillons A1 et A5 montre une bien meilleure tenue en présence d'un composé du potassium de l'échantillon A1 muni d'une protection incorporant à l'origine une association P-O-Ti-K en comparaison avec l'échantillon A5 muni d'une protection incorporant à l'origine une association P-O-Ti-Mg, vraisemblablement en raison du décalage de la plage d'efficacité dans le domaine des températures (points de ramollissement différents pour passage à l'état visqueux).

### Exemple 7

On obtient un échantillon A7 en procédant comme pour l'échantillon A1 mais en remplaçant KH₂PO₄ par NaH₂PO₄ dans la composition d'imprégnation.

La figure 8 illustre les résultats obtenus (perte de masse relative) pour les échantillons A1 et A7 soumis au test (IV). On a aussi fait figurer sur la figure 8 les résultats obtenus pour des échantillons A4 et A5 (ayant subi un traitement thermique jusqu'à 700°C).

Les résultats obtenus sont très semblables entre eux montrant qu'à très haute température la nature de l'élément M et la réalisation ou non d'un traitement thermique ne semblent pas avoir d'influence sur la performance de la protection.

### Exemple 8

On obtient des échantillons A8 (A8₁, A8₂ et A8₃) en procédant comme pour les échantillons A1 mais avec une composition d'imprégnation contenant, en poids, 33,8 % d'Al(H₂PO₄)₃, 10,8 % de poudre de titane, 16,2 % de poudre de bore, 5,4 % d'AlK(SO₄)₂ (sulfate d'aluminium et potassium) et 33,8 % d'eau.

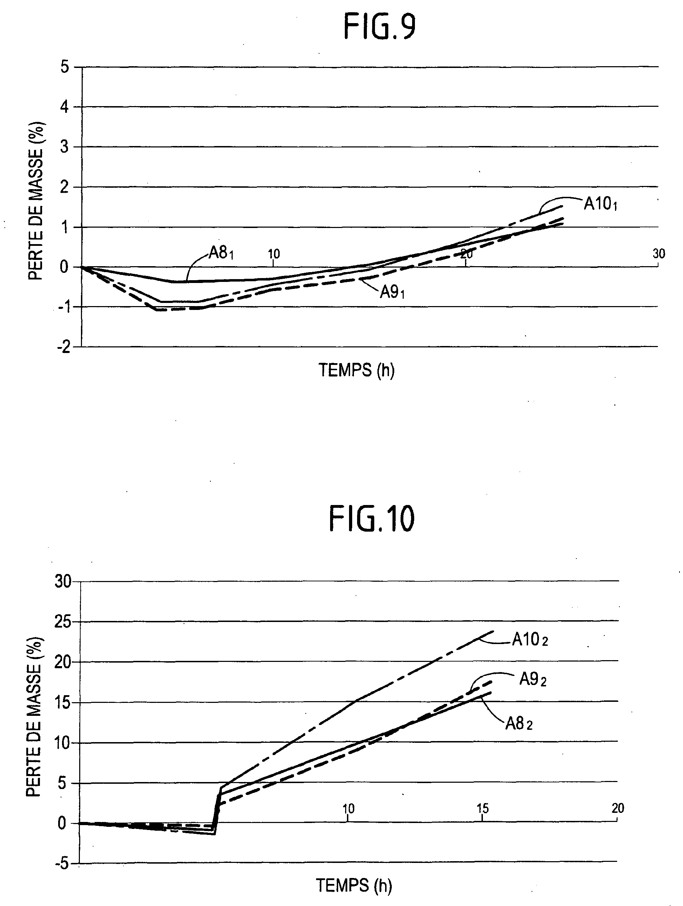

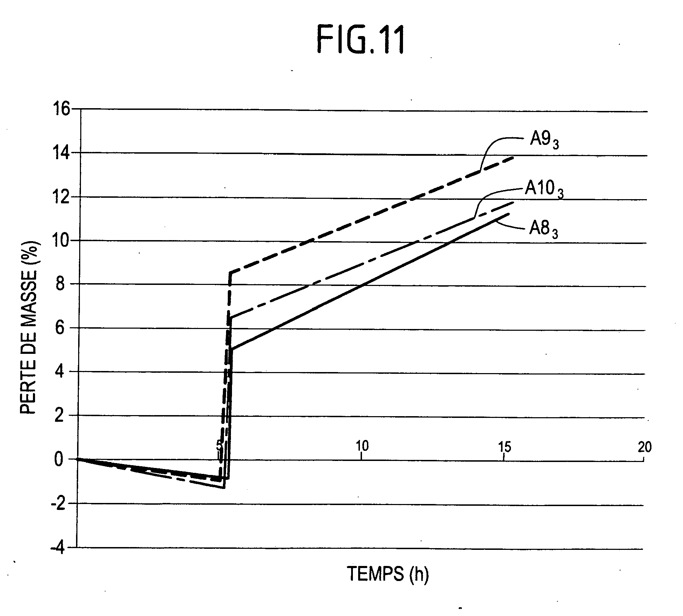

Les figures 9, 10, 11 illustrent les résultats obtenus (pertes de masse relatives) pour les échantillons A8 soumis aux tests (I), (III) et (IV), respectivement.

### Exemple 9

On obtient des échantillons A9 (A9₁, A9₂ et A9₃) en procédant comme pour les échantillons A8 mais en remplaçant AlK(SO₄)₂ par NaI (iodure de sodium) dans la composite d'imprégnation, les proportions en poids restant les mêmes.

Les figures 9, 10, 11 illustrent les résultats obtenus (pertes de masse relatives) pour les échantillons A9 soumis aux tests (I), (III) et (IV), respectivement.

### Exemple 10

On obtient des échantillons A10 (A10₁, A10₂ et A10₃) en procédant comme pour les échantillons A8 mais en remplaçant AlK(SO₄)₂ par Na₃C₆H₅O₇, 2H₂O (citrate de sodium) dans la composition d'imprégnation, les proportions en poids restant les mêmes.

Les figures 9, 10, 11 illustrent les résultats obtenus (pertes de masse relatives) pour les échantillons A10 soumis aux tests (I), (III) et (IV), respectivement.

Les exemples 8, 9, 10 en association avec les exemples précédents montrent l'existence d'un choix étendu de l'élément M parmi les sels d'alcalins ou alcalino-terreux tout en conservant des bonnes performances en protection contre l'oxydation.

Le tableau ci-après résume les conditions d'obtention d'échantillons A protégés selon l'invention dans les exemples qui précèdent. La quantité indiquée de composition de protection appliquée par unité de surface (ou masse surfacique de composition appliquée), est celle après traitement thermique lors de l'élaboration de l'échantillon (c'est-à-dire après séchage en étuve à 350°C ou après traitement subséquent à 700°C lorsque ce dernier est réalisé).

**Tableau**

| Echantillons | Compositions de protection (proportions en poids) | | Masse surfacique de composition appliquée (mg/cm²) | Traitement thermique |
|---|---|---|---|---|
| A1₁ | 32,05 % | Al(H₂PO₄)₃ | 18,1 | 350°C |
| A1₂ | 32,05 % | H₂O | 19,1 | |
| A1₃ | 15,4 % | Poudre Ti | 18,9 | |
| | 15,4 % | poudre B | | |
| A1₄ | 5,1 % | KH₂PO₄ | 18,5 | |
| A2 | id A1 | | 19,2 | 700°C |
| A3 | 32,05 % | Al(H₂PO₄)₃ | 17,8 | 700°C |
| | 32,05 % | H₂O | | |
| | 15,4 % | Poudre Ti | | |
| | 15,4 % | Poudre B | | |
| | 5,1 % | NaH₂PO₄ | | |
| A4 | 32,05 % | Al(H₂PO₄)₃ | 19,2 | 700°C |
| | 32,05 % | H₂O | | |
| | 15,4% | poudre Ti | | |
| | 15,4% | Poudre B | | |
| | 5,1 % | NaCl | | |
| A5 | 32,05 % | Al(H₂PO₄)₃ | 18,9 | 700°C |
| | 32,05 % | H₂O | | |
| | 15,4% | Poudre Ti | | |
| | 15,4% | Poudre B | | |
| | 5,1 % | MgCl₂ | | |
| A6 | 29 % | Al(H₂PO₄)₃ | 18,5 | 350°C |
| | 29% | H₂O | | |
| | 23,3% | Poudre Ti | | |
| | 14 % | Poudre B | | |
| | 4,7 % | KH₂PO₄ | | |
| A7 | id A3 | | 17,9 | 350°C |
| A8₁ | 33,8 % | Al(H₂PO₄)₃ | 16,7 | 350°C |
| | 33,8% | H₂O | | |
| A8₂ | 10,8 % | Poudre Ti | 15,8 | |
| A8₃ | 16,2 % | poudre B | 15,1 | |
| | 5,4% | AlK(SO₄)₂ | | |
| A9₁ | 33,8 % | Al(H₂PO₄)₃ | 15,2 | 350°C |
| A9₂ | 33,8% | H₂O | 14,9 | |
| | 10,8 % | Poudre Ti | | |
| A9₃ | 16,2 % | Poudre B | 15,9 | |
| | 5,4 % | NaI | | |
| A10₁ | 33,8 % | Al(H₂PO₄)₃ | 16,1 | 350°C |
| | 33,8 % | H₂O | | |
| A10₂ | 10,8 % | Poudre Ti | 14,3 | |
| | 16,2 % | Poudre B | | |
| A10₃ | 5,4 % | Na₃C₆H_{S}O₇, 2H₂O | 15,7 | |

## Revendications

1. Procédé pour la protection contre l'oxydation d'une pièce en un matériau poreux contenant du carbone, par imprégnation par une composition en milieu aqueux contenant un composé du phosphore, du titane et du bore,
**caractérisé en ce que** l'on utilise une composition d'imprégnation contenant au moins un composé du phosphore, du titane élémentaire, et du bore ou un composé du bore autre que du diborure de titane, pour former, en présence d'oxygène et d'au moins un élément M alcalin ou alcalino-terreux catalyseur de l'oxydation du carbone, au moins une association de type P-O-Ti-M liée par de l'oxyde de bore B₂O₃ et piégeant l'élément M.

2. Procédé selon la revendication 1, **caractérisé en ce qu'**un élément M au moins est introduit dans la composition d'imprégnation.

3. Procédé selon la revendication 2, **caractérisé en ce que** l'élément M est introduit sous forme d'un sel.

4. Procédé selon l'une quelconque des revendications 1 à 3, **caractérisé en ce que** le titane élémentaire est introduit dans la composition sous forme de poudre de titane.

5. Procédé selon l'une quelconque des revendications 1 à 4, **caractérisé en ce que** le bore est introduit dans la composition sous forme de poudre de bore élémentaire.

6. Procédé selon l'une quelconque des revendications 1 à 5, **caractérisé en ce qu'**après imprégnation un traitement thermique est effectué à une température comprise entre 350°C et 750°C.

7. Procédé selon l'une quelconque des revendications 1 à 6,
**caractérisé en ce que** la composition d'imprégnation contient en outre des charges solides réfractaires.

8. Procédé selon l'une quelconque des revendications 1 à 7, **caractérisé en ce que** la composition d'imprégnation contient, en pourcentages en poids :
- de 3% à 45% de phosphate(s) métallique(s) et/ou acide phosphorique,
- de 1% à 20% de poudre de titane élémentaire,
- de 5% à 50% de poudre de bore élémentaire,
- de 1% à 20% d'un sel d'alcalin ou alcalino-terreux,
- de 0% à 40% d'autres charges solides réfractaires, et
- de 10% à 90% d'eau.

9. Procédé selon l'une quelconque des revendications 1 à 8, **caractérisé en ce qu'**il comprend une phase préliminaire de traitement de la pièce par une solution contenant un agent surfactif et séchage, de manière à conférer au matériau composite une mouillabilité accrue par la présence de l'agent surfactif.

## Claims

1. A method of protecting a part made of porous material containing carbon against oxidation by impregnation with a composition in an aqueous medium containing a phosphorous compound, titanium, and boron,
the method being **characterized in that** an impregnation composition is used that contains at least one phosphorous compound, elemental titanium, and boron or a boron compound other than titanium diboride, to form in the presence of oxygen and at least one alkali or alkaline-earth element M that catalyses the oxidation of carbon, at least one P-O-Ti-M type association bonded by boron oxide B₂O₃ and trapping the element M.

2. A method according to claim 1, **characterized in that** at least one element M is introduced into the impregnation composition.

3. A method according to claim 2, **characterized in that** the element M is introduced in the form of a salt.

4. A method according to any one of claims 1 to 3, **characterized in that** the elemental titanium is introduced into the composition in the form of titanium powder.

5. A method according to any one of claims 1 to 4, **characterized in that** the boron is introduced into the composition in the form of elemental boron powder.

6. A method according to any one of claims 1 to 5, **characterized in that** after impregnation, heat treatment is performed at a temperature lying in the range 350°C to 750°C.

7. A method according to any one of claims 1 to 6, **characterized in that** the impregnation composition further contains refractory solid fillers.

8. A method according to any one of claims 1 to 7, **characterized in that** the impregnation composition contains, in percentages by weight:
• 3% to 45% metallic phosphate(s) and/or phosphoric acid;
• 1% to 20% elemental titanium powder;
• 5% to 50% elemental boron powder;
• 1% to 20% of an alkali or an alkaline-earth salt;
• 0% to 40% of other refractory solid fillers; and
• 10% to 90% water.

9. A method according to any one of claims 1 to 8, **characterized in that** it includes a preliminary stage of treating the part with a solution containing a surface active agent and drying it so as to confer wettability to the composite material that is increased by the presence of the surface active agent.

## Patentansprüche

1. Verfahren zum Schutz eines Teils aus einem porösen, kohlenstoffhaltigen Werkstoff gegen Oxidation, durch Imprägnieren mit einer Zusammensetzung in wäßrigem Medium, die eine Verbindung aus Phosphor, aus Titan und aus Bor enthält, **dadurch gekennzeichnet, daß** eine Imprägnierungszusammensetzung verwendet wird, die wenigstens eine Verbindung aus Phosphor, aus elementarem Titan und aus Bor oder eine andere Borverbindung als Titandiborid enthält, um in Anwesenheit von Sauerstoff sowie wenigstens eines alkalischen oder erdalkalischen Elements M, welches Katalysator der Oxidation des Kohlenstoffs ist, wenigstens eine Verbindung vom Typ P-O-Ti-M zu bilden, die durch Boroxid B₂O₃ gebunden ist und das Element M einschließt.

2. Verfahren nach Anspruch 1, **dadurch gekennzeichnet, daß** wenigstens ein Element M in die Imprägnierungszusammensetzung eingebracht ist.

3. Verfahren nach Anspruch 2, **dadurch gekennzeichnet, daß** das Element M in Form eines Salzes eingebracht ist.

4. Verfahren nach einem der Ansprüche 1 bis 3, **dadurch gekennzeichnet, daß** das elementare Titan in Form von Titanpulver in die Zusammensetzung eingebracht ist.

5. Verfahren nach einem der Ansprüche 1 bis 4, **dadurch gekennzeichnet, daß** das Bor in Form eines Pulvers aus elementarem Bor in die Zusammensetzung eingebracht ist.

6. Verfahren nach einem der Ansprüche 1 bis 5, **dadurch gekennzeichnet, daß** nach der Imprägnierung eine Wärmebehandlung bei einer Temperatur zwischen 350°C und 750°C durchgeführt wird.

7. Verfahren nach einem der Ansprüche 1 bis 6, **dadurch gekennzeichnet, daß** die Imprägnierungszusammensetzung außerdem feste feuerfeste Füllstoffe enthält.

8. Verfahren nach einem der Ansprüche 1 bis 7, **dadurch gekennzeichnet, daß** die Imprägnierungszusammensetzung in Gewichtsprozent folgendes enthält:
- 3 % bis 45 % Metallphosphat(e) und/oder Phosphorsäure,
- 1 % bis 20 % Pulver aus elementarem Titan,
- 5 % bis 50 % Pulver aus elementarem Bor,
- 1 % bis 20 % eines Alkali- oder Erdalkalisalzes,
- 0 % bis 40 % weiterer fester feuerfester Füllstoffe und
- 10 % bis 90 % Wasser.

9. Verfahren nach einem der Ansprüche 1 bis 8, **dadurch gekennzeichnet, daß** es eine vorbereitende Phase zur Behandlung des Teils mittels einer eine oberflächenaktive Substanz enthaltenden Lösung und Trocknung umfaßt, so daß dem Verbundwerkstoff durch das Vorliegen der oberflächenaktiven Substanz eine erhöhte Benetzbarkeit verliehen wird.
